# EUROPÄISCHE PATENTSCHRIFT

(11) **EP 4 303 118 B1**
(45) Veröffentlichungstag und Bekanntmachung des Hinweises auf die Patenterteilung: **28.10.2026**
(21) Anmeldenummer: 22183630.7
(22) Anmeldetag: 07.07.2022
(51) Int. Cl.: B64C 1/00, B64F 5/60, B64C 1/06, B64C 1/18, B64D 11/00, B64D 11/02, B64D 11/04, B64D 11/06

(54) **FLUGZEUGRUMPFSEKTION FÜR EIN FLUGZEUG UND FLUGZEUG DAMIT**
AIRCRAFT FUSELAGE SECTION AND AIRCRAFT THEREWITH
SECTION DE FUSELAGE D'AÉRONEF POUR UN AÉRONEF ET AÉRONEF DOTÉ D'UNE TELLE SECTION

(43) Veröffentlichungstag der Anmeldung: 10.01.2024
(73) Patentinhaber: Airbus Operations GmbH, 21129 Hamburg (DE)
(72) Erfinder: Benthien, Hermann, 21129 Hamburg (DE); Hegenbart, Matthias, 21129 Hamburg (DE)
(74) Vertreter: Airbus Germany

(56) Entgegenhaltungen:
- WO-A1-2005/012085
- WO-A1-2008/109711
- WO-A1-2010/136734
- DE-A1- 102008 007 838
- US-A1- 2007 007 392
- US-B1- 6 659 402

## Beschreibung

### Gebiet der Erfindung

Die Erfindung betrifft eine Flugzeugrumpfsektion für ein Flugzeug sowie ein Flugzeug mit einer erfindungsgemäßen Flugzeugrumpfsektion.

### Hintergrund der Erfindung

Heutige Passagierflugzeuge verfügen aus Gründen des Komforts und aufgrund großer Einsatzhöhen zur Verbrauchsoptimierung im Allgemeinen über druckfeste Rumpfzellen. Die Rumpfzelle eines Flugzeugs wird mit einer Vielzahl von hintereinander angeordneten und durch Querstoßlaschen verbundenen, im Wesentlichen tonnenförmigen Rumpfsektionen gebildet. Jede Rumpfsektion ist mit einer Vielzahl von hintereinander angeordneten Ringspanten gebildet, die außenseitig mit einer Rumpfzellenhaut beplankt sind. Zwischen den Ringspanten verlaufen in Richtung einer Längsachse des Flugzeugs Längsversteifungselemente, insbesondere so genannte Stringer, die bevorzugt gleichmäßig parallel zueinander beabstandet über den Umfang der Rumpfsektion innenseitig auf der Rumpfzellenhaut befestigt sind.

Ein Fußboden des Passagierraums wird unter anderem durch eine Vielzahl von Querträgern gebildet, die in der Regel beidseitig mit jeweils einem Ringspant verbunden sind. Die Querträger sind typischerweise beidseitig nach unten mit so genannten Samerstangen oder anderen Vertikalstreben abgefangen, deren eines Ende mit einem Querträgerende und deren anderes Ende mit einem Ringspant verbunden ist. Auf den Querträgern ist eine Vielzahl von Längsprofilen befestigt, die als Sitzschienenprofile zur Aufnahme der Bestuhlung ausgebildet sein können. Zwischen den Sitzschienenprofilen werden zur Schaffung eines durchgehenden, begehbaren und ebenen Fußbodens Fußbodenplatten eingelegt und befestigt. Die Fußbodenplatten sind in der Regel mit Sandwichplatten gebildet, die mit faserverstärkten Kunststoffen hergestellt werden. Der Fußboden unterteilt die Rumpfzelle des Flugzeugs horizontal in den Passagierraum bzw. die Passagierkabine und in den darunter liegenden Frachtraum.

In vielen Fällen wird die Innenausstattung einer Rumpfzelle eines Flugzeugs über weite Teile der Lebensdauer hinweg, die bis zu 30 Jahre betragen kann, nicht mehr oder nur geringfügig verändert. Eine Ausnahme stellt allenfalls die Umrüstung von Passagierflugzeugen in Frachtflugzeuge dar, die jedoch in der Regel einen beträchtlichen Aufwand darstellt und daher eher vermieden wird.

Der Anordnung von Passagiersitzen auf bekannten Fußbodensystemen sind meistens Grenzen gesetzt, wodurch eine Anpassung an kundenspezifische Ausstattungswünsche nicht immer leicht umzusetzen ist.

Aus der DE 10 2008 007 838 A1 ist ein Fußbodensystem bzw. eine Rumpfsektion mit einem derartigen Fußbodensystem bekannt, das im Wesentlichen selbsttragend ausgebildet ist und mechanisch weitgehend von der Rumpfzelle als Primärstruktur entkoppelt ist. Das bekannte System zeigt eine gewisse Flexibilität bei Anpassungswünschen. WO 2010/136734 A1 betrifft ein Flugzeug mit mindestens einem Bodenträger, mindestens einer Halterung, die den Bodenträger trägt, und mindestens einem Lager, das aus einem flexiblen Material besteht und den Bodenträger mit der Halterung verbindet. Durch das Lager aus flexiblem Material wird eine bessere Abstützung des Flugzeugbodens erzielt. US 2007/007392 A1 schlägt zur Vereinfachung der Anordnung und Montage vor, dass die Bodenelemente in einem Flugzeug-Frachtraum zumindest abschnittsweise mit Profilelementen zu einem sich über die gesamte Breite des Frachtraums erstreckenden Deckabschnitt fest verbunden sind, derart, dass auf den Deckabschnitt einwirkende Längskräfte, insbesondere durch die Ladung, die in Richtung einer Flugzeuglängsachse gerichtet sind und als Scherkräfte in Flächenrichtung des Frachtdecks wirken, auf Außenkanten des Deckabschnitts übertragen und von den Außenkanten auf eine durch Rippen verstärkte Außenhaut des Flugzeugs abgeleitet werden können.

Aufgabe der Erfindung ist es, ein alternatives Fußbodensystem bzw. eine alternative Flugzeugrumpfsektion bereitzustellen, bei der eine Anpassung an kundenspezifische Ausstattungswünsche leicht möglich ist.

### Beschreibung der Erfindung

Diese Aufgabe wird gelöst durch eine Flugzeugrumpfsektion laut dem Anspruch 1.

Durch den erfindungsgemäßen Aufbau der Rumpfsektion, insbesondere durch das Vorhandensein einer Mehrzahl von Bodenelementen, können Anpassungen an kundenspezifische Ausstattungswünsche vergleichsweise schnell und einfach umgesetzt werden. Dies ist unter anderem deshalb möglich, da Bodenelemente für sich genommen vergleichsweise leicht konstruktiv änderbar sind. Beispielsweise lässt sich deren konstruktiver Aufbau und Ausgestaltung, deren geometrische Abmessungen und deren gegenseitige mechanische Kopplung relativ leicht und unmittelbar beeinflussen, ohne dabei andere essentielle Rumpfkonstruktionselemente (Ringspanten, Längsversteifungselemente, Rumpfzellenhaut) variieren zu müssen. Unterschiedliche Kabinenkonfigurationen können unter anderem auch dadurch leichter kurzfristig verändert und angepasst werden, indem beispielsweise Bodenelemente mit unterschiedlich großer Ausdehnung in Richtung der Flugzeuglängsachse genutzt werden können. Mit anderen Worten: Geometrische Veränderungen der Kabinenkonfiguration können zum Beispiel durch Ausgleichsbodenelemente und/oder Bodenelemente mit jeweils unterschiedlicher Länge erfolgen.

Darüber hinaus bringt die erfindungsgemäße Rumpfsektion In der Fertigung und Ausrüstungsmontage Vorteile, da grundsätzlich ein vergleichsweise einfacher und schneller Ein- und Ausbau der Bodenelemente möglich ist.

Bei der erfindungsgemäßen Rumpfsektion übernehmen die Bodenelemente ferner eine Lastübertragungsfunktion, sodass auf andere herkömmliche Strukturelemente verzichtet werden kann.

Die Bodenelemente können beispielsweise in sich biegesteif ausgebildet sein. Typischerweise sind die Bodenelemente rechteckförmig ausgebildet bzw. weisen eine Länge (Erstreckung in der Flugzeuglängsrichtung und eine Breite (Erstreckung in der Flugzeugquerrichtung) auf. Ein Bodenelement kann beispielsweise eine Länge aufweisen, die in etwa einem Abstand zweier Ringspante in Längsrichtung entspricht. Alternativ sind auch Vielfache dieses Abstands möglich.

Die zwei Fußbodenlängsträger sind in Flugzeugquerrichtung einander gegenüberliegend an den Ringspanten angeordnet und daran befestigt (fest verbunden). Erfindungsgemäß kann unter einem Kabinenboden auch ein Frachtboden verstanden werden.

Unter mechanisch miteinander koppelbar, wird erfindungsgemäß verstanden, dass die jeweiligen Elemente mechanisch miteinander verbunden werden können. Im mechanisch miteinander verbundenen Zustand ist eine Lastübertragung über die mechanische Kopplung möglich. Solche mechanische Kopplungen bzw. Verbindungen können zum Beispiel gelenkige Verbindungen (wie Kupplungen), feste Verbindungen (wie gefügte Verbindungen: Nieten, Schrauben, Schweißen, Löten, Kleben) sein. Im mechanisch nicht miteinander verbundenen Zustand sind die jeweiligen Elemente voneinander getrennt und eine Lastübertragung ist nicht möglich.

Bei einer bevorzugten Ausführungsform sind die Bodenelemente zumindest abschnittsweise mit den beiden seitlichen Fußbodenlängsträgern mechanisch koppelbar. Auf diese Weise kann eine Lastübertragung von dem durch die Mehrzahl an Bodenelementen gebildeten Kabinenboden über die Fußbodenlängsträger in die weiteren Strukturelemente der Rumpfsektion erfolgen (wie z.B. in die Ringspante, Längsversteifungselemente bzw. Stringer oder die Außenhaut des Rumpfs). Der Begriff mechanisch miteinander koppelbar wird erfindungsgemäß wie vorbeschrieben verstanden.

Eine ebenfalls bevorzugte Ausführungsform der Flugzeugrumpfsektion ist dadurch gekennzeichnet, dass in der Flugzeugquerrichtung zwischen den beiden Fußbodenlängsträgern mindestens drei Bodenelemente angeordnet sind. Dadurch kann auf einfache Weise eine typische Single Aisle Konfiguration der Kabine umgesetzt werden (engl. für Ein-Gang-Bestuhlung in einem typischen Standardrumpfflugzeug). Beispielsweise ist es möglich, dass eine mittlere Reihe von hintereinander angeordneten Bodenelementen den Bodenbereich für den Kabinengang bildet und zwei jeweils seitlich daran angrenzende Reihen von hintereinander angeordneten Bodenelementen den Bodenbereich für eine Kabinenbestuhlung bilden. Die jeweiligen Bodenbereiche für die Kabinenbestuhlung können dann beispielsweise in der Economy-Bestuhlung mit dreisitzigen Stuhlreihen versehen sein. Für Business- oder Firstclass-Bestuhlungen können entsprechend zweisitzige Stuhlreichen oder andere Monumente vorgesehen sein. Bodenbereiche für die Kabinenbestuhlung können dann vorteilhafterweise jeweils einheitlich vorab hergestellt und anschließend in der Fertigung oder der Ausrüstungsmontage vergleichsweise einfach und schnell ein- oder ausgebaut werden (z.B. entweder nur Bodenelemente für einen Bodenbereich für Kabinenbestuhlung oder nur Bodenelemente für einen Bodenbereich für den Kabinengang). Es versteht sich, dass bei größeren Rumpfquerschnitten von Flugzeugen auch mehr als drei Bodenelemente in der Flugzeugquerrichtung zwischen den beiden Fußbodenlängsträgern angeordnet sein können. Beispielsweise bei der Umsetzung von Zwei-Gang-Bestuhlungen können fünf verschiedene Bodenbereiche vorgesehen sein, die aus jeweils hintereinander angeordneten Bodenelementen für abwechselnd eine Kabinenbestuhlung, einen ersten Kabinengang, weitere Kabinenbestuhlung, einen zweiten Kabinengang und schließlich eine dritte Kabinenbestuhlung bestehen. Grundsätzlich ist es alternativ auch möglich, dass bei einer Kabinenkonfiguration in der Flugzeugquerrichtung zwischen den beiden Fußbodenlängsträgern zwei Bodenelemente angeordnet sind.

Bevorzugt ist auch eine Flugzeugrumpfsektion bei der die Bodenelemente an den Fußbodenlängsträgern entlang verschiebbar und arretierbar angeordnet sind. Auf diese Weise können die Bodenelemente besonders einfach und schnell montiert bzw. demontiert werden. Somit lassen sich unterschiedliche Kabinenkonfigurationen besonders leicht umsetzen. Erfindungsgemäß wird unter verschiebbar und arretierbar verstanden, dass ein erster Zustand möglich ist, in dem die Bodenelemente an den Fußbodenlängsträgern frei entlang bewegt bzw. frei verschoben werden können. Ferner ist demgemäß ein zweiter Zustand möglich, bei dem die Bodenelemente an den Fußbodenlängsträgern arretiert werden können (mit anderen Worten: befestigt werden können). In letzterem Fall sind sie mit den Fußbodenlängsträgern im erfindungsgemäßen Sinne mechanisch gekoppelt (wie vorbeschrieben). Die Bodenelemente sind an den Fußbodenlängsträgern entlang in Richtung der Flugzeuglängsachse verschiebbar und arretierbar angeordnet.

Erfindungsgemäß wird eine Flugzeugrumpfsektion beschrieben, bei der die Fußbodenlängsträger als Führungsschienen ausgebildet sind und die Bodenelemente zur mechanischen Kopplung Führungseinrichtungen aufweisen, die mit den Führungsschienen mechanisch in Eingriff stehen. Dadurch ist vorteilhafterweise eine praktische und günstige Umsetzung der erfindungsgemäßen Rumpfsektion möglich. Um mit den Führungsschienen bzw. Fußbodenlängsträgern mechanisch in Eingriff zu stehen, können die Führungseinrichtungen an einer den Führungsschienen zugewandten Seite geometrisch komplementär zu den Führungsschienen ausgebildet sein. Anders ausgedrückt: Ein Querschnittsabschnitt der jeweiligen Führungsschiene kann sich mit einem Querschnittsabschnitt der Führungseinrichtung in komplementärer Weise ergänzen. Zum Beispiel können die Führungsschienen geometrisch konvexe Querschnittsbereiche aufweisen, die mit hierzu komplementär konkav ausgebildeten Querschnittsbereichen der Führungseinrichtungen in Eingriff stehen.

Bei einer bevorzugten Ausführungsform sind Arretiereinheiten zur gegenseitigen Arretierung von Bodenelementen untereinander und/oder zur Arretierung von Bodenelementen an Fußbodenlängsträgern vorgesehen, wobei die Arretiereinheiten eine Klemmvorrichtung aufweisen, die zum Eingehen einer reib- oder formschlüssigen Verbindung bewegbar ist. Durch entsprechende Arretiereinheiten kann die Bewegbarkeit zwischen den Bodenelementen untereinander und/oder zwischen den Bodenelementen und den Fußbodenlängsträgern gesperrt werden, sodass die Bodenelemente an den vorgesehenen Orten verbleiben. Dies unterstützt einerseits die leichte und unkomplizierte Installation. Andererseits ist auch eine verbesserte Kraftübertragung möglich.

Bevorzugt sind in Flugzeugquerrichtung nebeneinander und/oder in Flugzeuglängsrichtung hintereinander angeordnete Bodenelemente gelenkig miteinander verbunden. Auf diese Weise können die Bodenelemente miteinander verbunden werden und es ist weiterhin eine gewisse Relativbewegung von Bodenelementen zueinander möglich. Beispielsweise können mehrere miteinander gelenkig verbundene Bodenelemente eine Art Bodenelementkette bilden, die vormontiert und anschließend zusammenhängend in der Rumpfsektion installiert werden kann. Das Zulassen einer solchen gewissen Relativbeweglichkeit kann auf eine solche Vormontage- und/oder Installationssituation beschränkt sein oder gezielt (lokal) dauerhaft umgesetzt werden (also auch im späteren Einbauzustand). Für die Umsetzung einer derartigen gelenkigen Verbindung sind prinzipiell Gelenkverbindungen möglich. Beispielsweise können dazu herkömmliche Gelenkkupplungen eingesetzt werden.

Alternativ sind in Flugzeugquerrichtung nebeneinander angeordnete Bodenelemente und/oder in Flugzeuglängsrichtung hintereinander angeordnete Bodenelemente starr miteinander verbunden sind. Bei einer starren Verbindung der Bodenelemente kann der durch die Bodenelemente gebildete Kabinenboden vergleichsweise einfach ausgestaltet sein. Es kann sich ferner eine vorteilhafte Lastenübertragung einstellen. Erfindungsgemäß wird unter einer solchen starren Verbindung jedwede feste Verbindung verstanden, bei der beispielsweise Fügetechniken wie Schrauben, Klemmen oder dergleichen genutzt werden.

Bei einer weiteren bevorzugten Ausführungsform der Flugzeugrumpfsektion sind in Flugzeuglängsrichtung hintereinander angeordnete Bodenelemente in- oder aneinander steckbar ausgebildet. Hierzu sind an den Bodenelementen in der Flugzeuglängsrichtung zueinander geometrisch komplementär ausgebildete Elemente vorgesehen. Beispielsweise kann an einem vorderen Bodenelement in dessen hinteren Bereich ein Aufnahmeelement (bzw. ein buchsartiges Element) für ein an dem benachbarten hinteren Bodenelement vorne ausgebildetes Steckelement (bzw. ein steckerartiges Element) ausgebildet sein. Im ineinander gesteckten Zustand ist das Steckelement in das Aufnahmeelement hineingeschoben. Hierbei kann es sich prinzipiell um jedwede geometrische Passung handeln, die ein zweckmäßiges Installieren ermöglicht. Grundsätzlich sind hierfür Press- und Übergangs- sowie Spielpassungen denkbar. Erforderlichenfalls können die Bodenelemente dann im eingesteckten Zustand aneinander arretiert werden. Dies ist beispielsweise mit den vorgenannten, erfindungsgemäßen Mitteln möglich. Bei derartigen in- oder aneinander steckbaren Bodenelementen - aber prinzipiell auch bei davon unabhängigen Bodenelementen - kann erfindungsgemäß ein Abstand zwischen zwei in Relation zur Flugzeuglängsachse hintereinander angeordneten Funktionselementen stufenlos oder gestuft variierbar sein. Bei den hintereinander angeordneten Bodenelementen, die in- oder aneinander steckbar sind, kann vorteilhafterweise eine Veränderung des relativen Abstandes zweier Bodenelemente durch teleskopartiges Relativbewegen erfolgen.

Bevorzugt ist des Weiteren eine Ausführungsform, bei der die Bodenelemente zumindest teilweise gasdicht ausgebildet sind und ein Dekompressionsventil aufweisen. Somit ist in vorteilhafter Weise ein Druckausgleich im Dekompressionsfall möglich. Das bedeutet, dass für den Fall eines unvorhergesehenen Dekompressionsfalls, in dem im Kabinen- oder im Frachtbereich ein Druckabfall einsetzt, ein Druckausgleich durch den erfindungsgemäßen Kabinenboden möglich ist, sodass strukturelle Beschädigungen in dieser Situation vermieden werden können. Es versteht sich, dass die Anzahl und Größe derartiger Dekompressionsventile entsprechend den Vorgaben ausgelegt sein muss.

Ganz besonders bevorzugt weist mindestens ein Bodenelement mindestens ein Funktionselement, insbesondere einen Sitz, eine Sitzgruppe, ein Küchenmodul und/oder ein Sanitärmodul auf. Durch eine derartige Ausgestaltung der Bodenelemente ist eine besonders hohe Flexibilität bei der Ausgestaltung und Anpassung der Kabinenkonfiguration (bzw. des so genannten Kabinenlayouts) möglich. Darüber hinaus lassen sich die Bodenelemente mit integrierten Funktionselementen räumlich flexibel auf dem Fußbodensystem positionieren und zudem mit einem geringen Arbeitsaufwand montieren.

Eine ganz besonders bevorzugte Flugzeugrumpfsektion umfasst ferner Stützelemente, die einenends mit den Ringspanten und anderenends mit den Bodenelementen mechanisch gekoppelt sind. Diese Stützelemente sind typischerweise in Richtung der Flugzeughochachse verlaufende Vertikalstreben (so genannte "Z-Struts"). Sie können an sich in herkömmlicher Weise als Samerstangen ausgebildet sein. Unter der entsprechenden mechanischen Kopplung wird ebenfalls die vorbeschriebene erfindungsgemäße mechanische Kopplung verstanden. Durch die entsprechenden Stützelemente bzw. Vertikalstreben werden auf den erfindungsgemäßen Kabinenboden einwirkende Kräfte aufgenommen bzw. abgeleitet.

Bei einer bevorzugten Weiterbildung der vorhergehenden Ausführungsform sind die Stützelemente über zusätzliche Längsträger, insbesondere über als Führungsschienen ausgebildete Längsträger, mit den Ringspanten und den Bodenelementen mechanisch gekoppelt. Durch die zusätzlichen Längsträger kann das erfindungsgemäße Prinzip der schnellen und einfachen Umrüstung auf den Bereich der Verbindung des Kabinenbodens mit den Vertikalstreben erweitert werden. Die mechanische Kopplung der Stützelemente mit den Bodenelementen bzw. mit den Ringspanten ist ebenfalls im erfindungsgemäßen Sinne zu verstehen.

Die Aufgabe wird ferner auch gelöst durch ein Flugzeug mit einer erfindungsgemäßen Flugzeugrumpfsektion. Das erfindungsgemäße Flugzeug macht von denselben Vorteilen Gebrauch wie die erfindungsgemäß ausgebildeten Rumpfsektionen.

Die oben beschriebenen Aspekte und weitere Aspekte, Merkmale und Vorteile der Erfindung können ebenfalls aus den Beispielen der Ausführungsform entnommen werden, welche im Folgenden unter Bezugnahme auf die anhängenden Zeichnungen beschrieben wird.

### Beschreibung der Zeichnungen

In den Figuren werden gleiche Bezugszeichen für gleiche oder zumindest ähnliche Elemente, Komponenten oder Aspekte verwendet. Es wird angemerkt, dass im Folgenden Ausführungsformen im Detail beschrieben werden, die lediglich illustrativ und nicht beschränkend sind. In den Ansprüchen schließt das Wort "aufweisend" nicht andere Elemente aus und der unbestimmte Artikel "ein" schließt eine Mehrzahl nicht aus. Die Figuren sind nicht maßstäblich zu verstehen sondern haben nur schematischen und illustrativen Charakter. Es zeigen
- Figur 1: einen Querschnitt durch eine erfindungsgemäße Rumpfsektion,
- Figur 2: eine perspektivische Ansicht eines erfindungsgemäßen Kabinenbodens mit verschiedenen Bodenelementen und Funktionselementen,
- Figur 3a - 3c: drei Querschnittsansichten durch erstens eine erfindungsgemäße, halbe Rumpfsektion ohne Bodenelement, zweitens ein Bodenelement und drittens eine schematische Darstellung einer halben Rumpfsektion mit darin montiertem Bodenelement,
- Figur 4: eine Seitenansicht auf ein einzelnes erstes Bodenelement,
- Figur 5: eine Seitenansicht auf zwei hintereinander angeordnete und miteinander mechanisch gekoppelte Bodenelemente,
- Figur 6: eine Seitenansicht auf ein einzelnes zweites Bodenelement,
- Figur 7: eine perspektivische Ansicht dreier hintereinander angeordneter Bodenelemente, die in- oder aneinander steckbar sind,
- Figur 8a - 8c: eine perspektivische Ansicht eines dritten und eines vierten Bodenelements, sowie einen Querschnitt durch eine Arretiereinheit mit einer Klemmvorrichtung,
- Figur 9: zwei Seitenansichten auf Ketten von miteinander gekoppelten Bodenelementen,
- Figur 10: ein Längsschnitt durch eine Flugzeugkabine mit einer ersten Kabinenkonfiguration,
- Figur 11: ein Längsschnitt durch eine Flugzeugkabine mit einer zweiten Kabinenkonfiguration,
- Figur 12: ein Querschnitt durch einen Dreiecksbereich einer erfindungsgemäßen Rumpfsektion,
- Figur 13: eine perspektivische Ansicht zweier hintereinander angeordneter Bodenelemente, die Leitungen aufweisen,
- Figur 14: eine Seitenansicht auf ein Bodenelement mit einem Dekompressionsventil,
- Figur 15: einen Querschnitt durch weitere erfindungsgemäße Rumpfsektion, und
- Figur 16: ein erfindungsgemäßes Flugzeug.

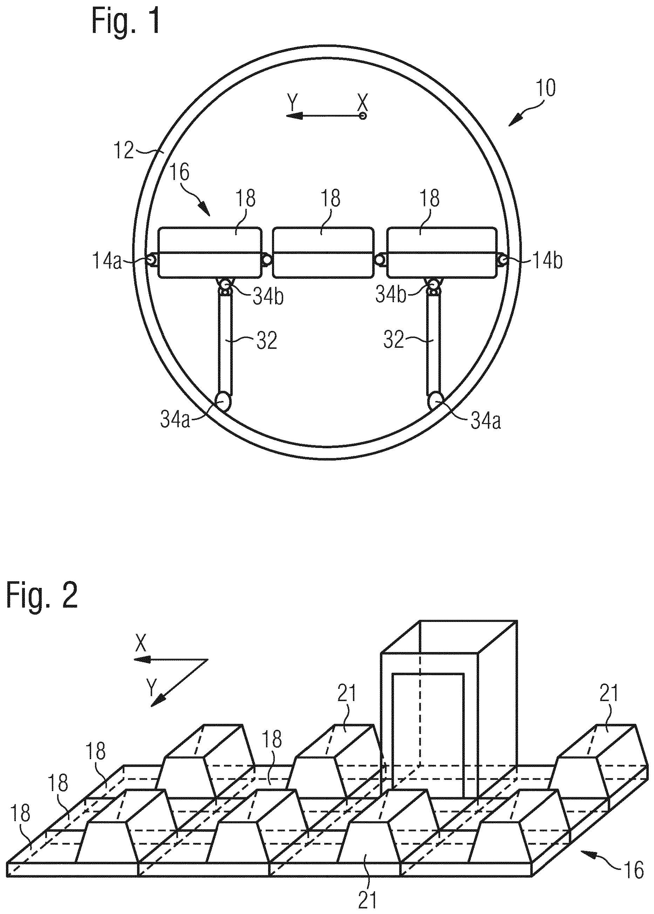

Die **Figur** 1 zeigt eine Flugzeugrumpfsektion 10 für ein Flugzeug 40. Die Flugzeugrumpfsektion 10 weist eine Vielzahl von Ringspanten 12 auf, die in einer Flugzeuglängsrichtung X hintereinander angeordnet sind. Ferner weist die Flugzeugrumpfsektion 10 zwei Fußbodenlängsträger 14a, 14b auf, die in einer Flugzeugquerrichtung Y einander gegenüberliegend an den Ringspanten 12 angeordnet sind. Die Fußbodenlängsträger 14a, 14b begrenzen einen Kabinenboden 16 seitlich. Die Flugzeugrumpfsektion 10 weist darüber hinaus eine Mehrzahl an Bodenelementen 18 auf, die mechanisch miteinander koppelbar sind. Die Mehrzahl an Bodenelementen 18 sind zwischen den beiden seitlichen Fußbodenlängsträgern 14a, 14b angeordnet und bilden zumindest teilweise den Kabinenboden 16. In einer Flugzeugquerrichtung Y sind zwischen den beiden Fußbodenlängsträgern 14a, 14b drei Bodenelemente 18 angeordnet.

Die Flugzeugrumpfsektion 10 umfasst ferner Stützelemente 32, die einenends mit den Ringspanten 12 und anderenends mit den Bodenelementen 18 mechanisch koppelbar sind. Die Stützelemente 32 sind über zusätzliche Längsträger 34a, 34b mit den Ringspanten 12 und den Bodenelementen 18 mechanisch gekoppelt. Dabei sind an den jeweiligen Enden der Stützelemente 32 Längsträger 34a, 34b vorgesehen (an dem einen Ende des Stützelements 32, das einem Bodenelement 18 zugewandt ist, ist ein erster Längsträger 34b vorgesehen und an dem anderen Ende des Stützelements 32, das den Ringspanten 12 zugewandt ist, ist ein anderer zweiter Längsträger 34a vorgesehen).

Die Stützelemente 32 übernehmen die Funktion von Vertikalstreben zur Übertragung von Lasten des Kabinenbodens 16. Sowohl die Fußbodenlängsträger 14a, 14b als auch die zusätzlichen Längsträger 34a, 34b sind als Führungsschienen ausgebildet.

Die Mehrzahl von Bodenelementen 18 sind zumindest abschnittsweise mit den beiden seitlichen Fußbodenlängsträgern 14a, 14b mechanisch gekoppelt. Die Bodenelemente 18 sind an den Fußbodenlängsträgern 14a, 14b entlang verschiebbar und arretierbar angeordnet.

Die Rumpfsektion 10 bzw. ein Flugzeug 40 umfassend mehrere derartige Rumpfsektionen 10 ermöglicht durch das Vorhandensein der Mehrzahl an Bodenelementen 18 sowie deren verschiebbare und arretierbare Anordnung entlang der Fußbodenlängsträgern 14a, 14b sowie der zusätzlichen Längsträger 34a, 34b eine schnelle und einfach durchzuführende Anpassung an kundenspezifische Ausstattungswünsche, beispielsweise im Rahmen einer Änderung der Kabinenkonfiguration (Kabinenlayouts).

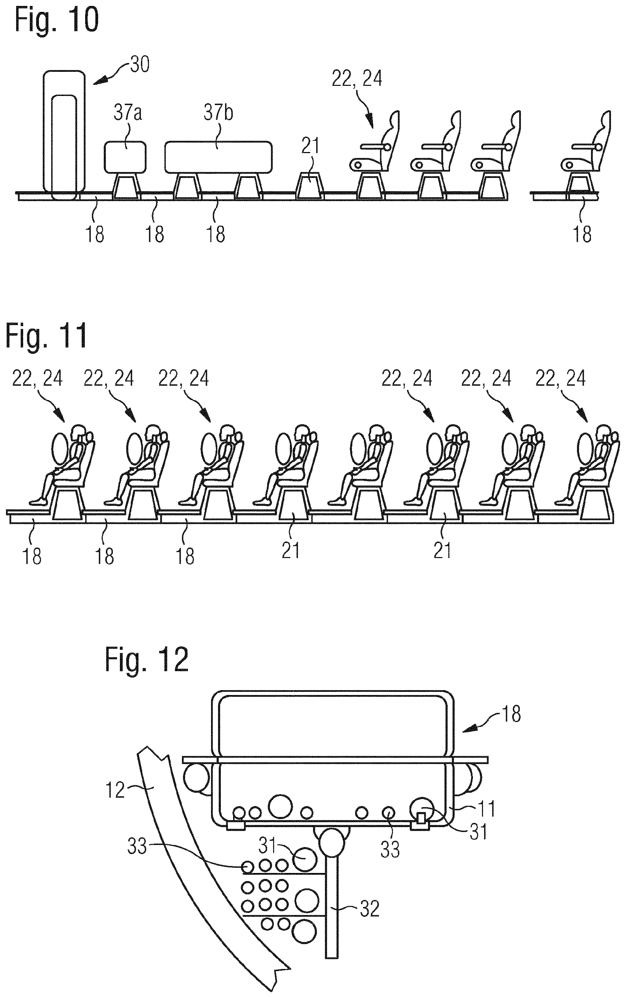

**In** **Figur** 2 ist ein Kabinenboden 16 perspektivisch dargestellt, der aus einer Vielzahl von Bodenelementen 18 aufgebaut ist. In der Flugzeuglängsrichtung X sind beispielhaft vier Bodenelemente 18 hintereinander angeordnet und in der Flugzeugquerrichtung Y sind beispielhaft drei Bodenelemente 18 angeordnet. Die in der Flugzeugquerrichtung Y nebeneinander angeordneten Bodenelemente 18 und die in der Flugzeuglängsrichtung X hintereinander angeordneten Bodenelemente 18 sind in dieser Ausführungsform miteinander starr verbunden. Der somit gebildete Kabinenboden 16 ist konstruktiv vergleichsweise einfach ausgestaltet. Eine mittlere Reihe von hintereinander angeordneten Bodenelementen 18 bildet den Bodenbereich für den Kabinengang. Zwei jeweils seitlich daran angrenzende Reihen von hintereinander angeordneten Bodenelementen 18 bilden jeweils Bodenbereiche für Kabinenbestuhlungen. In der Figur 2 sind hierzu an den Bodenelementen 18 der beiden seitlichen Reihen lediglich einzelne Aufbauten 21 ausgebildet. Die Aufbauten 21 können als Stützstruktur für Funktionselemente, wie beispielsweise Sitze 22, Sitzgruppen 24 oder ein Sanitärmodul 30 dienen (in der Fig. 2 nicht dargestellt, vgl. jedoch z.B. die Figuren 10 und 11). Der Raum zwischen zwei hintereinander angeordneten Aufbauten 21 kann bei einer klassischen Sitzgruppenanordnung den Passagierfußraum bilden.

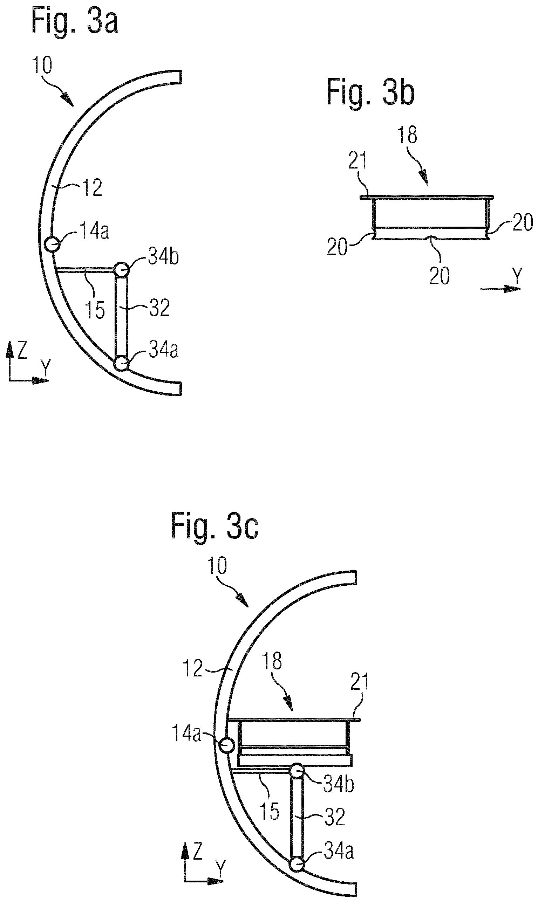

Die **Figuren 3a** bis **3c** zeigen hälftige Querschnitte durch eine Flugzeugrumpfsektion 10, wobei in der Fig. 3a noch kein Bodenelement 18 eingebaut ist, in der Fig. 3b ein Bodenelement 18 bereitgestellt wird und in der Fig. 3c das Bodenelement 18 an der dafür vorgesehen Position in der Flugzeugrumpfsektion 10 angeordnet wurde. Wie in der Figur 1 umfasst die Flugzeugrumpfsektion 10 der Figuren 3a und 3c eine Vielzahl von Ringspanten 12, zwei Fußbodenlängsträger 14a (hier nur einer der beiden dargestellt) und Stützelemente 32, die einenends mit den Ringspanten 12 und anderenends mit den Bodenelementen 18 mechanisch gekoppelt sind. Die Stützelemente 32 sind über zwei zusätzliche Längsträger 34a, 34b mit den Ringspanten 12 und den Bodenelementen 18 mechanisch gekoppelt. Ferner ist eine zusätzliche Querstrebe 15 zur Stabilisierung der Stützelemente 32 vorgesehen, die die zusätzliche Längsträger 34a, 34b ebenfalls mit den Ringspanten 12 verbindet.

Die Fußbodenlängsträger 14a, 14b und die zusätzlichen Längsträger 34a, 34b sind als Führungsschienen ausgebildet. Das Bodenelement 18 weist zur mechanischen Kopplung mit dem Fußbodenlängsträger 14a bzw. zur mechanischen Kopplung mit dem zusätzlichen Längsträger 34a Führungseinrichtungen 20 auf, die mit den Führungsschienen (bzw. den Fußbodenlängsträgern 14a, 14b und den zusätzlichen Längsträgern 34a, 34b) mechanisch in Eingriff stehen. Um mit den Führungsschienen bzw. den Fußbodenlängsträgern 14a, 14b mechanisch in Eingriff zu stehen, sind die Führungseinrichtungen 20 an einer den Fußbodenlängsträgern 14a, 14b zugewandten Seite geometrisch komplementär zu den Fußbodenlängsträgern 14a, 14b ausgebildet. Konkret weisen die Führungsschienen bzw. die Fußbodenlängsträger 14a, 14b geometrisch konvexe Querschnittsbereiche auf, die mit hierzu konkav ausgebildeten Querschnittsbereichen der Führungseinrichtungen 20 in Eingriff stehen.

Aus den Querschnittsansichten der Figuren 3b und 3c ist die an dem Bodenelement 18 ausgebildete Aufbaute 21 zur Aufnahme von Funktionselementen, wie z.B. Sitze 22, aus einer anderen Perspektive als in der Figur 2 zu sehen.

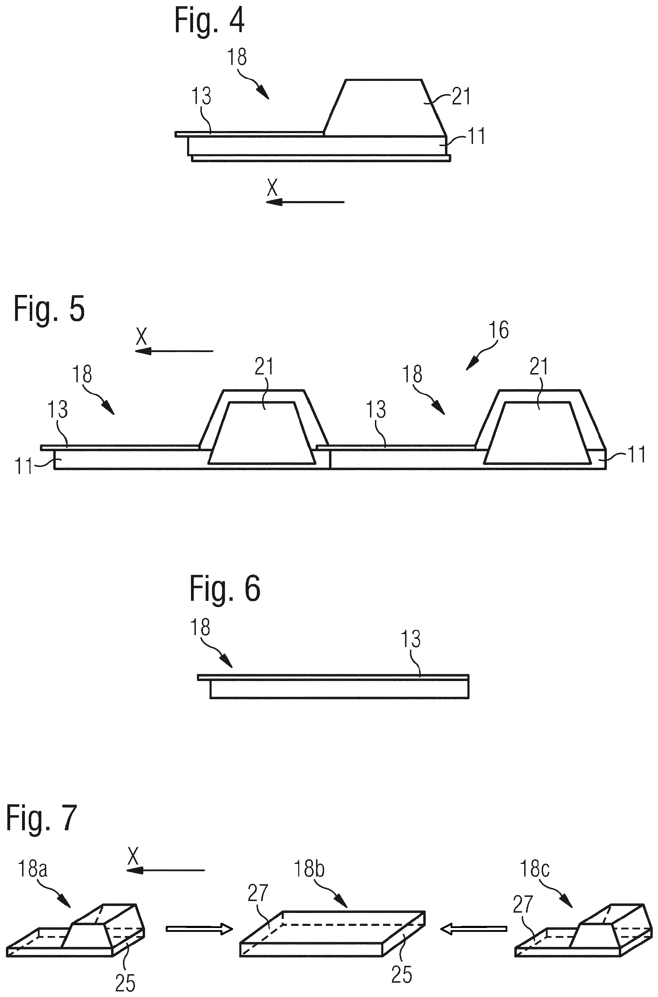

In der **Figur 4** ist ein Bodenelement 18 in einer Seitenansicht dargestellt. Im hinteren Bereich ist eine Aufbaute 21 ausgebildet, die als Stützstruktur für Funktionselemente, wie z.B. Sitze 22, Sitzgruppen 24 oder ein Sanitärmodul 30 dienen kann. Die Aufbaute 21 kann ferner als Raum zur Aufbewahrung von Passagiergepäck oder dergleichen genutzt werden (als eine Art Staufach). Ein derartiges Bodenelement 18 kann beispielsweise beim Aufbau einer Reihe von hintereinander angeordneten Bodenelementen 18 eingesetzt werden, die einen Bodenbereich für eine Kabinenbestuhlung bilden (vgl. z.B. Figur 2). Das Bodenelement 18 kann eine Rahmenstruktur 11 und ein darauf angeordnetes Fußbodenpanel 13 aufweisen.

Die **Figur 5** zeigt zwei in der Flugzeuglängsrichtung X hintereinander angeordnete starr miteinander mechanisch gekoppelte Bodenelemente 18. Durch die starre Verbindung ist der durch die Bodenelemente 18 gebildete Kabinenboden 16 einfach ausgestaltet. Die beiden in der Figur 5 dargestellten Bodenelemente 18 weisen ebenfalls jeweils eine Aufbaute 21 sowie ein darin angeordneten Raum zur Aufbewahrung von Passagiergepäck auf. Die beiden Bodenelemente 18 sind ferner ineinander gesteckt. Hierzu sind die entsprechenden Rahmenstrukturen 11 der Bodenelemente 18 entsprechend ausgebildet. Um die Bodenelemente 18 durch Passagiere betreten zu können, sind auf der Oberseite der Bodenelemente 18 Fußbodenpanele 13 angeordnet.

In der **Figur 6** ist ein Bodenelement 18 in einer Seitenansicht dargestellt, das keine Aufbaute 21 sondern lediglich ein oder mehrere Fußbodenpanele 13 aufweist und somit zur Ausbildung beispielsweise eines Kabinengangbereichs, vergleichbar dem mittleren Kabinengangbereich der Figur 2, geeignet ist.

Die **Figur 7** zeigt mehrere hintereinander angeordnete Bodenelemente 18a, 18b, 18c in einem Zustand vor einem In- oder Aneinanderstecken. Die Bodenelemente 18 sind in- oder aneinander steckbar ausgebildet. Hierzu sind an den Bodenelementen 18 in der Flugzeuglängsrichtung X zueinander geometrisch komplementär ausgebildete Elemente vorgesehen, die ein In- oder Aneinanderstecken ermöglichen. An dem vordersten Bodenelement 18a ist hierzu in dessen hinteren Bereich ein Aufnahmeelement 25 für ein an dem benachbarten mittleren Bodenelement 18b vorne ausgebildetes Steckelement 27 ausgebildet. Im ineinander gesteckten Zustand ist das Steckelement 27 in das Aufnahmeelement 25 hineingeschoben (nicht dargestellt). Dieselben Elemente 25, 27 können ebenfalls zwischen dem mittleren Bodenelement 18b und dem weiteren Bodenelement 18c vorgesehen sein, sodass sukzessive mehrere Bodenelemente 18a, 18b, 18c nacheinander auf diese Weise miteinander mechanisch gekoppelt werden können.

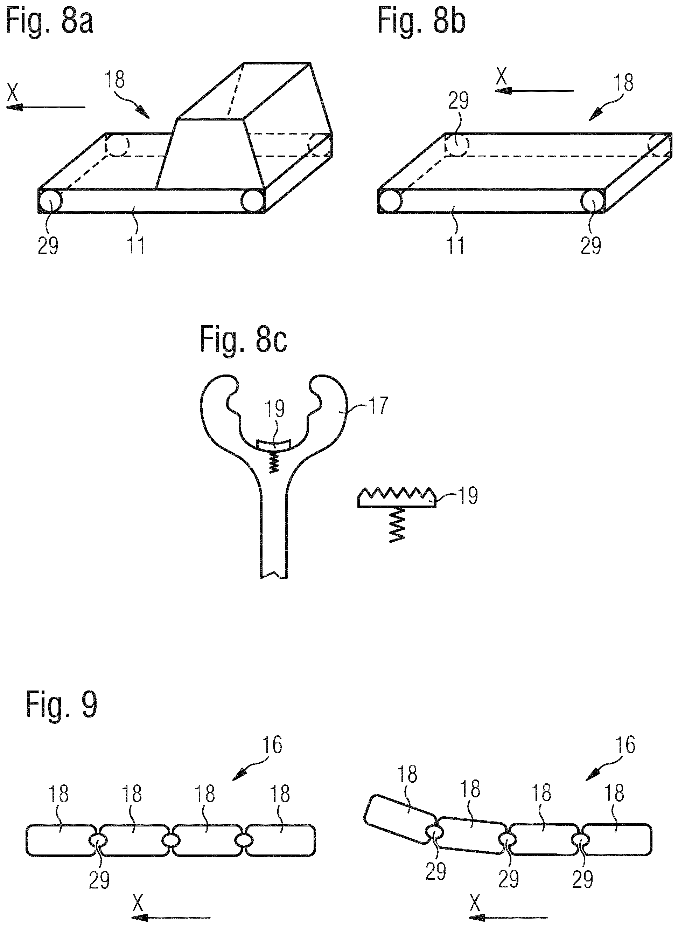

In den **Figuren 8a** und **8b** sind in Flugzeuglängsrichtung X hintereinander angeordnete und gelenkig miteinander verbindbare Bodenelemente 18 dargestellt. Hierzu weisen die Bodenelemente 18 an Ecken der Rahmenstruktur 11 ausgebildete Gelenkverbindungen 29 auf (hier schematisch durch Kreise dargestellt). Beispielsweise können dazu herkömmliche Gelenkkupplungen eingesetzt werden. Somit können die Bodenelemente 18 miteinander verbunden werden (vgl. Fig. 9).

In der **Figur 8c** ist eine Arretiereinheit 17 zur gegenseitigen Arretierung von Bodenelementen 18 untereinander und/oder zur Arretierung von Bodenelementen 18 an Fußbodenlängsträgern 14a, 14b dargestellt. Derartige Arretiereinheiten 17 können alternativ oder zusätzlich zu den in den Figuren 8a und 8b schematisch dargestellten Gelenkkupplungen 29 vorgesehen sein. Die Arretiereinheiten 17 weisen eine Klemmvorrichtung 19 auf, die zum Eingehen einer reib- oder formschlüssigen Verbindung bewegbar ist.

Die **Figur 9** zeigt mehrere in der Flugzeuglängsrichtung X hintereinander angeordnete und miteinander gelenkig verbundene Bodenelemente 18, die zusammen einen Abschnitt eines Kabinenbodens 16 bilden. Auf der linken Seite der Figur 9 ist der Kabinenboden 16 eben bzw. gerade ausgebildet. Auf der rechten Seite der Figur 9 dagegen ist der Kabinenboden 16 aufgrund der Gelenkigkeit in einer gekrümmten Form ausgebildet. Die mechanische Kopplung der Bodenelemente 18 untereinander erfolgt durch mehrere Gelenkverbindungen 29. Diese Bodenelemente 18 bilden eine Art Kette, die vormontiert und anschließend zusammenhängend in der Rumpfsektion 10 installiert werden kann.

Die **Figuren 10** und **11** zeigen Längsschnitte durch zwei Flugzeugkabinen mit verschiedenen Kabinenkonfigurationen (Kabinenlayouts). Dabei weisen die Bodenelemente 18 verschiedene Funktionselemente, wie zum Beispiel Sitze 22, ein Sitzgruppen 24, Küchenmodule (nicht dargestellt) und/oder Sanitärmodule 30 auf. Des Weiteren sind auch andersartige Transportmodule 37a, 37b denkbar. Aufgrund dessen dass die Bodenelemente 18 vergleichsweise schnell und einfach demontiert und anschließend in einer anderen Konfiguration wieder montiert werden können, ist eine Anpassung der Kabinenkonfiguration auf verschiedene Kundenwünsche oder Einsatzvarianten vorteilhaft möglich. In der Figur 10 sind in einem vorderen Kabinenbereich bereits mehrere Bodenelemente 18 mit verschiedenen Funktionselementen miteinander mechanisch gekoppelt. Lediglich ein weiteres Bodenelement 18 ist in einem hinteren Kabinenbereich bereitgestellt worden aber noch nicht mit den vorderen Bodenelementen 18 mechanisch gekoppelt worden. Die in der Figur 11 dargestellte Kabinenkonfiguration ist einheitlich mit gleichen Funktionselementen, nämlich Sitzen 22 bzw. Sitzgruppen 24 ausgestattet. In den Aufbauten 21 der einzelnen Bodenelemente 18 sind jeweils Räume zur Aufbewahrung von Passagiergepäck vorgesehen.

In der **Figur 12** ist ein so genannter Dreiecksbereich der Rumpfsektion 10 mit einem Bodenelement 18 dargestellt. Der Dreiecksbereich wird durch das Stützelement 32, das Bodenelement 18 und einen Abschnitt des Rumpfspants 12 begrenzt. In dem Bodenelement 18 sind Fluidleitungen 31, und/oder elektrische Leitungen 33 integriert. Bei den Fluidleitungen 31 kann es sich beispielsweise um Luft- und/oder Wasserleitungen handeln. Bei den elektrischen Leitungen 33 kann es sich beispielsweise um Datenkabel oder dergleichen handeln. Diese Leitungen 31, 32 können insbesondere in der Rahmenstruktur 11 des Bodenelements 18 angeordnet sein. Es ist möglich, dass diese Leitungen 31, 33 bereits vor einer Montage der Bodenelemente 18 in den Bodenelementen 18 eingebaut sind, sodass beim Einbau des Bodenelements 18 in das Flugzeug 40 lediglich die entsprechende Verbindung mit dem vorderen bzw. hinteren Bodenelement 18 hergestellt werden muss. Alternativ ist natürlich auch denkbar, dass ein entsprechender Einbau derartiger Leitungen 31, 33 erst im Anschluss an den Einbau der Bodenelemente 18 erfolgt.

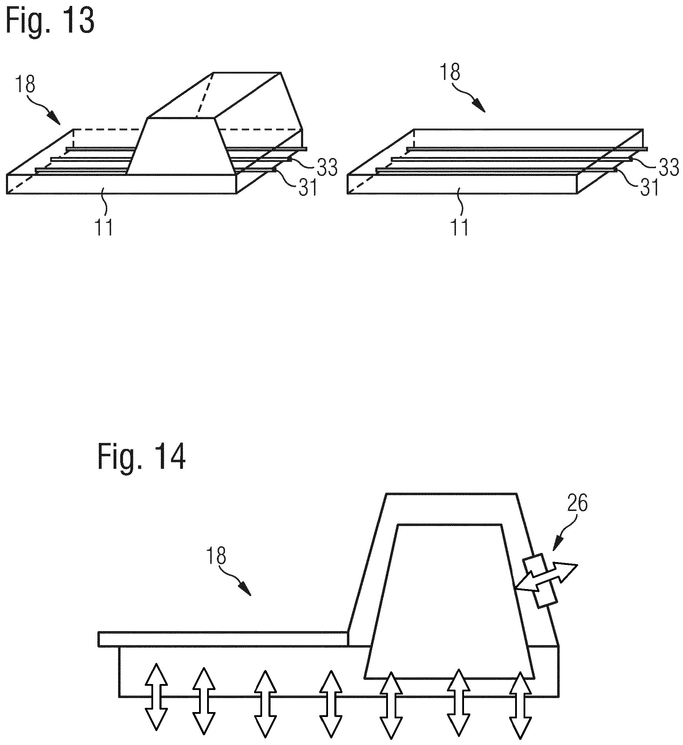

In **Figur 13** sind zwei hintereinander angeordnet dargestellte Bodenelemente 18 gezeigt, wobei in den Bodenelementen 18, insbesondere in deren Rahmenstrukturen 11 Fluidleitungen 31, und/oder elektrische Leitungen 33 integriert sind.

Die **Figur 14** zeigt ein Bodenelement 18, das zumindest teilweise gasdicht ausgebildet ist und das ein Dekompressionsventil 26 aufweist. Damit ist ein Druckausgleich im Dekompressionsfall möglich. Strukturelle Beschädigungen in einem solchen Fall können dadurch vermieden werden.

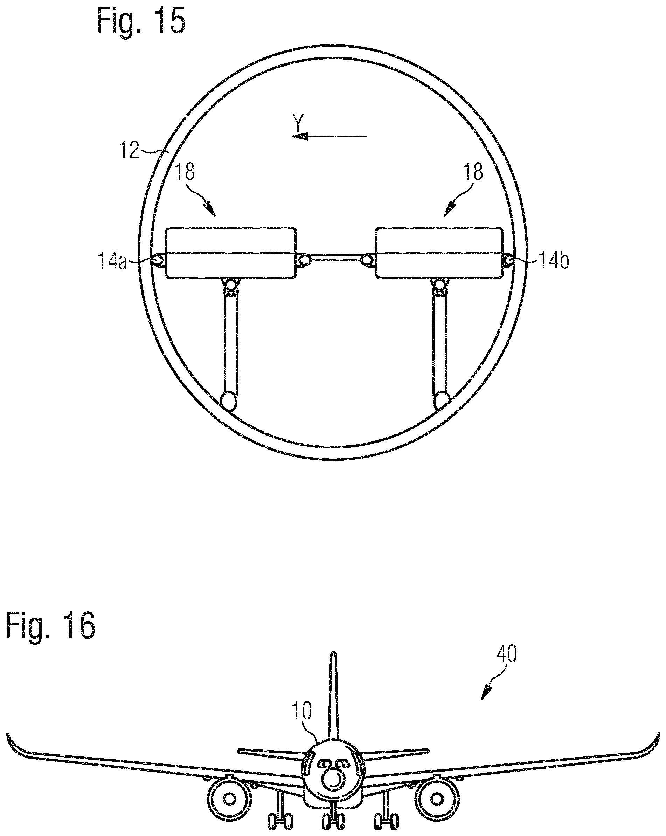

In **Figur** 15 ist eine alternative Ausführungsform zu der Figur 1 dargestellt, in der in der Flugzeugquerrichtung Y zwischen den beiden Fußbodenlängsträgern 14a, 14b nicht drei sondern zwei Bodenelemente 18 angeordnet sind.

Die **Figur** 16 zeigt schließlich ein Flugzeug 40 mit einer Rumpfsektion 10.

## Patentansprüche

1. Flugzeugrumpfsektion (10) für ein Flugzeug (40), mit
einer Vielzahl von Ringspanten (12), die in Flugzeuglängsrichtung (X) hintereinander angeordnet sind,
zwei Fußbodenlängsträgern (14a, 14b),
die in Flugzeugquerrichtung (Y) einander gegenüberliegend an den Ringspanten (12) angeordnet und als Führungsschienen ausgebildet sind, und
einer Mehrzahl von koppelbaren Bodenelementen (18),
die mechanisch miteinander gekoppelt sind,
die zwischen den beiden seitlichen Fußbodenlängsträgern (14a, 14b) angeordnet sind, und
die zumindest teilweise den Kabinenboden (16) bilden, wobei sie zur mechanischen Kopplung mit den Fußbodenlängsträgern (14a, 14b) Führungseinrichtungen (20) aufweisen, die mit den Führungsschienen mechanisch in Eingriff stehen, so dass die Fußbodenlängsträger (14a, 14b) den Kabinenboden (16) seitlich begrenzen.

2. Flugzeugrumpfsektion nach Anspruch 1, **dadurch gekennzeichnet, dass** die Bodenelemente (18) zumindest abschnittsweise mit den beiden seitlichen Fußbodenlängsträgern (14a, 14b) mechanisch koppelbar sind.

3. Flugzeugrumpfsektion nach Anspruch 1 oder 2, **dadurch gekennzeichnet, dass** in der Flugzeugquerrichtung (Y) zwischen den beiden Fußbodenlängsträgern (14a, 14b) mindestens drei Bodenelemente (18) angeordnet sind.

4. Flugzeugrumpfsektion nach einem der vorhergehenden Ansprüche, **dadurch gekennzeichnet, dass** die Bodenelemente (18) an den Fußbodenlängsträgern (14a, 14b) entlang verschiebbar und arretierbar angeordnet sind.

5. Flugzeugrumpfsektion nach einem der vorhergehenden Ansprüche, **dadurch gekennzeichnet, dass** Arretiereinheiten (17) zur gegenseitigen Arretierung von Bodenelementen (18) untereinander und/oder zur Arretierung von Bodenelementen (18) an Fußbodenlängsträgern (14a, 14b) vorgesehen sind, wobei die Arretiereinheiten (17) eine Klemmvorrichtung (19) aufweisen, die zum Eingehen einer reib- oder formschlüssigen Verbindung bewegbar ist.

6. Flugzeugrumpfsektion nach einem der vorhergehenden Ansprüche, **dadurch gekennzeichnet, dass** in Flugzeugquerrichtung (Y) nebeneinander und/oder in Flugzeuglängsrichtung (X) hintereinander angeordnete Bodenelemente (18) gelenkig miteinander verbunden sind.

7. Flugzeugrumpfsektion nach einem der vorhergehenden Ansprüche 1 bis 5, **dadurch gekennzeichnet, dass** in Flugzeugquerrichtung (Y) nebeneinander angeordnete Bodenelemente (18) und/oder in Flugzeuglängsrichtung (X) hintereinander angeordnete Bodenelemente (18) starr miteinander verbunden sind.

8. Flugzeugrumpfsektion nach einem der vorhergehenden Ansprüche 1 bis 5 oder 7,
**dadurch gekennzeichnet, dass** in Flugzeuglängsrichtung (X) hintereinander angeordnete Bodenelemente (18) in- oder aneinander steckbar ausgebildet sind.

9. Flugzeugrumpfsektion nach einem der vorhergehenden Ansprüche, **dadurch gekennzeichnet, dass** die Bodenelemente (18) zumindest teilweise gasdicht ausgebildet sind und ein Dekompressionsventil (26) aufweisen.

10. Flugzeugrumpfsektion nach einem der vorhergehenden Ansprüche, **dadurch gekennzeichnet, dass** mindestens ein Bodenelement (18) mindestens ein Funktionselement, insbesondere einen Sitz (22), eine Sitzgruppe (24), ein Küchenmodul (28) und/oder ein Sanitärmodul (30) aufweist.

11. Flugzeugrumpfsektion nach einem der vorhergehenden Ansprüche, ferner umfassend Stützelemente (32), die einenends mit den Ringspanten (12) und anderenends mit den Bodenelementen (18) mechanisch gekoppelt sind.

12. Flugzeugrumpfsektion nach Anspruch 11, **dadurch gekennzeichnet, dass** die Stützelemente (32) über zusätzliche Längsträger (34a, 34b), insbesondere über als Führungsschienen ausgebildete Längsträger (34a, 34b), mit den Ringspanten (12) und den Bodenelementen (18) mechanisch gekoppelt sind.

13. Flugzeug (40) mit einer Flugzeugrumpfsektion (10) nach einem der vorhergehenden Ansprüche.

## Claims

1. An aircraft fuselage section (10) for an aircraft (40), comprising:
a plurality of annular frames (12) arranged one behind the other in the longitudinal aircraft direction (X),
two longitudinal floor beams (14a, 14b) arranged opposite one another on the annular frames (12) in the transverse aircraft direction (Y) and configured as guide rails, and
a plurality of couplable floor elements (18) which are mechanically coupled to one another, which are arranged between the two lateral longitudinal floor beams (14a, 14b), and which at least partially form the cabin floor (16), wherein, for mechanical coupling to the longitudinal floor beams (14a, 14b), they have guide devices (20) which mechanically engage with the guide rails, such that the longitudinal floor beams (14a, 14b) laterally delimit the cabin floor (16).

2. The aircraft fuselage section according to claim 1, **characterized in that** the floor elements (18) can be mechanically coupled at least in sections to the two lateral longitudinal floor beams (14a, 14b).

3. The aircraft fuselage section according to claim 1 or 2, **characterized in that** at least three floor elements (18) are arranged between the two longitudinal floor beams (14a, 14b) in the transverse aircraft direction (Y).

4. The aircraft fuselage section according to any of the preceding claims, **characterized in that** the floor elements (18) are arranged so as to be displaceable and lockable along the longitudinal floor beams (14a, 14b).

5. The aircraft fuselage section according to any of the preceding claims, **characterized in that** locking units (17) are provided for mutually locking floor elements (18) to one another and/or for locking floor elements (18) to longitudinal floor beams (14a, 14b), wherein the locking units (17) have a clamping device (19) which is movable to establish a frictional or form-fitting connection.

6. The aircraft fuselage section according to any of the preceding claims, **characterized in that** floor elements (18) arranged adjacent to one another in the transverse aircraft direction (Y) and/or one behind the other in the longitudinal aircraft direction (X) are connected to one another in an articulated manner.

7. The aircraft fuselage section according to any of the preceding claims 1 to 5, **characterized in that** floor elements (18) arranged adjacent to one another in the transverse aircraft direction (Y) and/or floor elements (18) arranged one behind the other in the longitudinal aircraft direction (X) are rigidly connected to one another.

8. The aircraft fuselage section according to any of the preceding claims 1 to 5 or 7, **characterized in that** floor elements (18) arranged one behind the other in the longitudinal aircraft direction (X) are configured to be pluggable into or onto one another.

9. The aircraft fuselage section according to any of the preceding claims, **characterized in that** the floor elements (18) are configured to be at least partially gas-tight and have a decompression valve (26).

10. The aircraft fuselage section according to any of the preceding claims, **characterized in that** at least one floor element (18) has at least one functional element, in particular a seat (22), a seat group (24), a galley module (28), and/or a sanitary module (30).

11. The aircraft fuselage section according to any of the preceding claims, further comprising support elements (32) which are mechanically coupled at one end to the annular frames (12) and at the other end to the floor elements (18).

12. The aircraft fuselage section according to claim 11, **characterized in that** the support elements (32) are mechanically coupled to the annular frames (12) and the floor elements (18) via additional longitudinal beams (34a, 34b), in particular via longitudinal beams (34a, 34b) configured as guide rails.

13. An aircraft (40) comprising an aircraft fuselage section (10) according to any of the preceding claims.

## Revendications

1. Section de fuselage d'aéronef (10) pour un aéronef (40), comprenant:
une pluralité de cadres annulaires (12) qui sont disposés les uns derrière les autres dans la direction longitudinale d'aéronef (X),
deux longerons de plancher (14a, 14b) qui sont disposés à l'opposé l'un de l'autre sur les cadres annulaires (12) dans la direction transversale d'aéronef (Y) et sont réalisés sous forme de rails de guidage, et
une pluralité d'éléments de plancher couplables (18) qui sont couplés mécaniquement les uns aux autres, qui sont disposés entre les deux longerons de plancher latéraux (14a, 14b), et qui forment au moins en partie le plancher de cabine (16), dans laquelle, pour le couplage mécanique avec les longerons de plancher (14a, 14b), ils comportent des dispositifs de guidage (20) qui viennent en prise mécanique avec les rails de guidage, de sorte que les longerons de plancher (14a, 14b) délimitent latéralement le plancher de cabine (16).

2. Section de fuselage d'aéronef selon la revendication 1, **caractérisée en ce que** les éléments de plancher (18) peuvent être couplés mécaniquement, au moins par sections, aux deux longerons de plancher latéraux (14a, 14b).

3. Section de fuselage d'aéronef selon la revendication 1 ou 2, **caractérisée en ce qu'**au moins trois éléments de plancher (18) sont disposés entre les deux longerons de plancher (14a, 14b) dans la direction transversale d'aéronef (Y).

4. Section de fuselage d'aéronef selon l'une des revendications précédentes, **caractérisée en ce que** les éléments de plancher (18) sont disposés de manière à pouvoir être déplacés et verrouillés le long des longerons de plancher (14a, 14b).

5. Section de fuselage d'aéronef selon l'une des revendications précédentes, **caractérisée en ce que** des unités de verrouillage (17) sont prévues pour le verrouillage mutuel d'éléments de plancher (18) entre eux et/ou pour le verrouillage d'éléments de plancher (18) sur des longerons de plancher (14a, 14b), dans laquelle les unités de verrouillage (17) comportent un dispositif de serrage (19) qui est mobile pour établir une liaison par friction ou par complémentarité de forme.

6. Section de fuselage d'aéronef selon l'une des revendications précédentes, **caractérisée en ce que** des éléments de plancher (18) disposés les uns à côté des autres dans la direction transversale d'aéronef (Y) et/ou les uns derrière les autres dans la direction longitudinale d'aéronef (X) sont reliés entre eux de manière articulée.

7. Section de fuselage d'aéronef selon l'une des revendications 1 à 5 précédentes, **caractérisée en ce que** des éléments de plancher (18) disposés les uns à côté des autres dans la direction transversale d'aéronef (Y) et/ou des éléments de plancher (18) disposés les uns derrière les autres dans la direction longitudinale d'aéronef (X) sont reliés entre eux de manière rigide.

8. Section de fuselage d'aéronef selon l'une des revendications 1 à 5 ou 7 précédentes, **caractérisée en ce que** des éléments de plancher (18) disposés les uns derrière les autres dans la direction longitudinale d'aéronef (X) sont conçus pour être enfichables les uns dans les autres ou les uns sur les autres.

9. Section de fuselage d'aéronef selon l'une des revendications précédentes, **caractérisée en ce que** les éléments de plancher (18) sont conçus de manière au moins partiellement étanche aux gaz et comportent une soupape de décompression (26).

10. Section de fuselage d'aéronef selon l'une des revendications précédentes, **caractérisée en ce qu'**au moins un élément de plancher (18) comporte au moins un élément fonctionnel, en particulier un siège (22), un groupe de sièges (24), un module de cuisine (28) et/ou un module sanitaire (30).

11. Section de fuselage d'aéronef selon l'une des revendications précédentes, comprenant en outre des éléments de support (32) qui sont couplés mécaniquement à une extrémité aux cadres annulaires (12) et à l'autre extrémité aux éléments de plancher (18).

12. Section de fuselage d'aéronef selon la revendication 11, **caractérisée en ce que** les éléments de support (32) sont couplés mécaniquement aux cadres annulaires (12) et aux éléments de plancher (18) par l'intermédiaire de longerons supplémentaires (34a, 34b), en particulier par l'intermédiaire de longerons (34a, 34b) réalisés sous forme de rails de guidage.

13. Aéronef (40) comprenant une section de fuselage d'aéronef (10) selon l'une des revendications précédentes.
